# EUROPEAN PATENT APPLICATION

(11) **EP 4 768 410 A1**
(43) Date of publication of application: **01.07.2026**
(21) Application number: 25226877.6
(22) Date of filing: 23.12.2025
(51) Int. Cl.: B65H 27/00, H01M 10/04, H01M 50/403

(54) **CONVEYING ASSEMBLY, MACHINE COMPRISING IT, USE OF THE CONVEYING ASSEMBLY IN THE PRODUCTION OF A LAYERED SEMI-FINISHED PRODUCT, AND ELECTROCHEMICAL CELL PRODUCTION METHOD INVOLVING SUCH USE**

(30) Priority: 24.12.2024 IT 202400030018
(71) Applicant: G.D S.p.A., 40133 Bologna (BO) (IT)
(72) Inventor: BIONDI, Andrea, 40133 BOLOGNA (BO) (IT); CAVAZZA, Luca, 40133 BOLOGNA (BO) (IT); LENZI, Matteo, 40133 BOLOGNA (BO) (IT); TINTI, Giacomo, 40133 BOLOGNA (BO) (IT)
(74) Representative: Cavallin, Tommaso

(57) **Abstract**

A machine and method for forming an electrochemical cell, wherein a conveying assembly (1000) is used in the machine and method comprising an idle roller (100) having a geometric axis (X) and an operating surface (101) configured to be engaged at least partially by a strip element (10) adapted to be dragged in a longitudinal direction thereof. The idle roller (100) comprises a shell (120) with a primary portion (120a) having a thickness that is substantially uniform along the geometric axis (X) and not exceeding 1 mm. The shell (120) can be coupled to at least one rotoidal joint member (200) defining an axis of rotation and connecting the idle roller (100 to a support structure (400). The conveying assembly (1000) comprises a support device (500) including two coupling portions (501, 502) configured to couple to the idle roller (100) in a rotatable manner about the geometric axis (X), and at least one sensor device (1001, 1002) connected to one of said coupling portions (501, 502) and to the idle roller (100) and configured to detect a stress mutually transmitted between said coupling portion (501, 502) and the idle roller (100).

## Description

The present invention relates to a conveying assembly for a strip element which may consist especially but not exclusively of an electrode strip or a separator strip adapted to form electrochemical cells.

Such a machine can be, by way of non-limiting example, a machine for forming electrochemical cells by superimposing mutually alternating electrode and separator layers.

The present invention also relates to the use of such a conveying assembly in the production of a layered semi-finished product and a method of producing electrochemical cells using such an idle roller.

An electrochemical cell is a device capable of converting chemical energy into electrical energy (and/or vice versa), such as galvanic cells, whether primary or secondary, fuel cells or electrolytic cells.

The present invention, in fact, has a preferred, though not exclusive, application in the field of electrochemical cell production, e.g. for battery production.

The battery production process, in particular, requires that electrode strip layers and separator strip layers are stacked according to a predefined structure.

For example, in the case of prismatic batteries, it is known to stack layers of electrode strip and layers of separator strip pre-cut into alternating flat layers, or by stacking layers of separator strip folded back on itself several times in a "z" shape to pre-cut layers of electrode strip, interposed between the different layers of separator strip, or again, in the case of coil-shaped batteries, alternating layers of electrode strip and layers of separator strip have been known to be wound into a coil, as in the case of cylindrical or flattened coil-shaped batteries.

In the present disclosure as well as in the claims enclosed herein, certain terms and expressions are deemed to have, unless otherwise expressly indicated, the meaning expressed in the following definitions.

The term "separator strip" refers to a solid product which, within an industrial production line, is in the form of an elongated ribbon or strip, i.e. an element in which the extension in one of its longitudinal directions is significantly greater than its extension in a direction transverse to the longitudinal direction. This separator strip can be formed by a single strip or ribbon of material, or by several overlapped strips so as to form a multilayer.

The separator strip also has characteristics that allow for a certain amount of bending as it moves along its longitudinal direction.

The separator strip can, for example, be used by overlapping mutually alternated insulating layers so as to form a stacked or sandwich or wound structure for the manufacture of an electrochemical cell.

Furthermore, the term "separator strip" indicates a strip-shaped product that has the characteristic of allowing a form of separation and/or isolation with respect to other parts placed near it. This separation can take place through physical or chemical characteristics depending on the intended conditions of use. An example of such a separation characteristic can be represented by an electrically insulating polymer strip placed between and in contact with two electrode strips.

This specific configuration mentioned is merely an example and not a limitation.

In this context, the term "layered" refers to the result of an action to create a structure comprising a plurality of layers consisting of a separator strip superimposed on an electrode strip, whereby this structure is folded back on itself or wound around itself to create a continuous structure adapted to form an electrochemical cell.

A layered structure of this kind can be applied not only in the sector of electrochemical cells but also in other sectors, such as for example in that of the conductors or capacitors within which layered structures can be likewise used.

The term "engage" referring to the interaction between two parts means that these parts are in contact in such a way that they can transmit stress to each other, e.g. by friction, as a result of the application - to one or both of them - of stress that causes mutual sliding of these parts over each other.

The fact that one part engages another is not to be understood in a limiting sense, i.e. that one of the engaged parties must fully cover the other, it being understood that even a partial contact interaction of one part with the other falls within the scope of this definition of "engaging".

In other words, the expression whereby one part engages another part is to be understood as including both the case where the two parts mutually completely cover each other and where one part interacts with -or covers- only a portion of the other part.

The term "average roughness (Ra)" refers, for example, to an arithmetic mean roughness of a surface calculated, preferably, according to the ISO standard 21920:2021.

The Applicant, in the context of the constant need to increase the performance and efficiency of production processes, has preliminarily observed how, in a production line in which a strip element is used or processed that is transferred and conveyed along its longitudinal direction in order to be advanced in the production line, the mechanical interaction between the strip element and the means adapted to convey it can constitute an important element of limitation of the production capacity of the line itself.

In particular, the Applicant noted that higher strip element handling speeds in the production line result in higher productivity.

The Applicant realised that the strip handling speed significantly affects the production speed of the product in which the strip element is used.

In addition, the Applicant observed that variations in production speed and/or high strip element handling speeds in the production line have an appreciable impact on the stresses experienced by the strip element.

The Applicant understood that a productivity-limiting problem of solutions of the prior art may be associated with the number of interactions of the strip element along the production line and/or the conveying curvature of the strip element: in other words, the number of interactions, the speed of handling and/or the conveying curvature, are decisive in relation to the maintenance of the physical and mechanical characteristics of the strip element, such as its integrity and the state of tension to which it is subjected. More specifically, the Applicant observed an increased risk of degradation or damage to the strip element as its handling speed on the production line increased. Similar observations were made when reducing the conveying curvature.

The Applicant observed that, with particular reference to the conveying curvature of the strip element, a reduction of the conveying curvature did not lead to a proportionate reduction of the possibility of deterioration or damage of the strip element. On the contrary, the Applicant observed that as the curvature decreased, the risk of deterioration or damage even increased with the same handling speed of the strip element.

The Applicant therefore realised that an increase in the conveying curvature would contribute significantly to maintaining the physical and mechanical characteristics of the strip element.

In this context, the Applicant also understood that high handling speeds and/or discontinuities in the handling of the strip element, i.e. dynamic effects of positive or negative acceleration of the strip element, i.e. increase or decrease in the speed of the strip element, respectively, during the handling of the strip element on the production line, may contribute to an increased risk of degradation or damage of the strip element itself.

The applicant therefore realised that a reduction of discontinuities in the handling of the strip would contribute significantly to maintaining the physical and mechanical characteristics of the strip element.

In line with these insights, the Applicant realised that the dynamic interaction between the conveying means and the strip element could be an issue with a high impact on productivity.

In more detail, the Applicant perceived the problem that pursuing maximisation of productivity based on a high strip element handling speed on the production line was in conflict with high conveying curvature radii, e.g. typically required to prevent degradation of the physical and mechanical characteristics of strip elements suitable to be stacked to form electrochemical cells.

In other words, the Applicant realised that - in accordance with traditional techniques - there was a problem of productivity limitation in an approach aimed at promoting an increase in handling speed and, also, an increase in the radius of curvature of the strip elements processed on the production line. In fact, the Applicant noted that this approach resulted in an increased risk of deterioration or damage to the strip elements, which implies an increase in production waste and, in turn, a decrease in productivity.

Thus, the Applicant realised that, in order to overcome the limits of the prior art, it was necessary to achieve high conveying speeds of the strip elements while simultaneously increasing the radii of the conveying curvature of the strip elements but containing the risk of physical or mechanical degradation or damage to the strip elements.

In order to meet this requirement, the Applicant realised that it was necessary to solve the problem of reducing the mechanical and dynamic interactions between the conveying means and the strip elements.

In particular, the Applicant perceived the centrality, in order to increase productivity, of solving the problem of effectively reducing the effect of such mechanical and dynamic interaction during the positive or negative acceleration transients of the strip element by operating on the conformation of the means adapted to convey it during production.

Further, the Applicant noted that as a result of these numerous variations in rotational speed and applied forces, the idle rollers were subject to prolonged wear and tear over time, leading to significant deterioration in their mechanical performance.

Following this, the Applicant thus perceived that it would be advantageous not only to design suitable idle roller configurations to meet these requirements, but also to devise a conveying assembly that could monitor and verify the actual behaviour of these rollers over time without further varying the mechanical and dynamic interaction during the aforementioned acceleration transients.

In this context, the Applicant found that such a result could be pursued by reducing the rotational inertia of idle rollers used as conveying means for the strip element, so as to ensure limited tensile stress of the idle roller itself on the strip element following acceleration of the latter, while maintaining a high radius of curvature of the strip element, given by a large diameter of the idle roller, and monitoring over time the maintenance of this operating condition.

Thus, the Applicant has found a solution to the above problems by reducing the rotational inertia of an idle roller for a strip element, while at the same time allowing for the same to adopt radii of curvature suitable to prevent or minimise the risk of deterioration or damage of the strip element - even in the case in which the latter comprises a separator strip or an electrode strip for forming electrochemical cells - also suitable to obtain for the idle roller, mechanical performances in any case adequate to guarantee the shape and dimensional stability necessary for precise and/or reliable convey of the strip element by introducing a control mode that could advantageously and effectively couple with such idle roller.

A conveying assembly according to a first aspect of the present technical solution comprises an idle roller having a geometric axis and an operating surface configured to be engaged at least partially, when the idle roller is being used, by a strip element adapted to be dragged in a longitudinal direction thereof. The operating surface may be adapted to exert a frictional interaction with the strip element, when the idle roller is in use, for example to bring about a movement of the strip element guided by the idle roller.

The idle roller, in accordance with the present aspect of the technical solution, may comprise a shell that defines, externally, the operating surface and, internally, a cavity within the idle roller.

According to an embodiment, the shell may have a primary portion, which extends with a thickness, measured in a radial direction to the geometric axis, that is essentially uniform along the geometric axis and may be no more than 1 mm.

In addition, the shell may be coupled to at least one rotoidal joint member which defines an axis of rotation and which is adapted to connect the idle roller preferably to a support structure or support device in a rotatable manner about the axis of rotation so that the geometric axis substantially coincides with the axis of rotation.

According to an embodiment, the conveying assembly comprises the support device comprising two coupling portions configured to couple to the idle roller in a rotatable manner about the geometric axis.

According to an embodiment, the conveying assembly comprises a support portion that mechanically joins the two coupling portions and preferably extends between them outside the idle roller shell.

According to an embodiment, the conveying assembly comprises at least one sensor device connected to one of said coupling portions and to the idle roller and configured to detect a stress mutually transmitted between said coupling portion and the idle roller.

Thanks to this innovative technical solution, the Applicant noticed that it was possible to monitor the operation of each idle roller to prevent deterioration or damage conditions of a strip element that is conveyed by an idle roller, resulting from mutual stresses, between strip element and idle roller, exceeding predefined safety thresholds. Thus, it is possible to optimise the production of a production line, especially of electrochemical cells, by preventing damage to the strip element during its interaction with idle rollers with which it interacts.

Furthermore, in accordance with the present aspect of the technical solution, it is thus possible to obtain a conveying assembly comprising an idle roller with low rotational inertia, which makes it possible to minimise mechanical and dynamic interactions with the strip element with which it is in contact during positive or negative accelerations of the latter.

In other words, an idle roller according to this first aspect of the technical solution has minimised rotational inertia, such that the dynamic stresses which the idle roller can exert on a strip element which engages it and which is drawn under positive or negative acceleration are minimised so that the risk of degradation or damage attributable to such dynamic stresses is likewise minimised, in favour of increased overall productivity of a production line.

According to this first aspect of the technical solution, it is in fact possible to limit the risk of deterioration or damage to the strip element while adopting increased handling speeds and radii of conveying curvature of the strip element, compared to a traditional production line.

It is clear that this specific technical configuration of the idle roller synergistically enhances and particularly emphasises the advantageous presence of the sensor device, making it possible to monitor over time the evolution of the behaviour of the innovative technical solution described herein.

Additionally, this technical solution is particularly compact and advantageously adaptable to different dimensional requirements encountered by a person skilled in the art.

In accordance with a second aspect of the present technical solution, a machine for processing strip elements may comprise at least one supply section, configured to receive at least one strip element to be processed in such machine; wherein the strip element can be a separator strip, possibly multilayer, and/or an electrode strip in the case where said machine is intended for the production of electrolytic cells or is part of a production line for forming them.

The machine according to this aspect of the technical solution may comprise at least one processing section that is configured to process the at least one strip element from the supply section.

The machine according to this aspect of the technical solution can also comprise an intermediate section that communicates with the supply section and the processing section to transfer at least one strip element between them.

In accordance with this second aspect of the technical solution, at least one of the supply section, the processing section and the intermediate section includes at least one conveying assembly according to the first aspect of the invention.

The machine, according to this second aspect of the technical solution, can also be configured in such a way that, in operation, the at least one idle roller comprised in the conveying assembly exerts frictional interaction with the at least one strip element, for example to effectively convey it along a predefined path in the machine.

It can be understood how a machine that comprises a conveying assembly in accordance with the first aspect of the present invention, including one or more idle rollers, achieves higher productivity than conventional solutions. In addition, because the idle rollers have low rotational inertia, the machine comprising them as a whole is able to greatly limit the risk of deterioration or damage to a strip element working at the same handling speed as a conventional machine. Correspondingly, with the same risk of deterioration or damage, compared to a conventional machine, a machine - in accordance with this second aspect of the technical solution - will achieve higher strip element handling speeds and higher radii of conveying curvature thereof, thus increasing overall productivity.

In addition, the reduction of mutual dynamic stresses between idle rollers and strip element allows for structurally less onerous supports for the idle rollers themselves, with the same performance in terms of reliability, durability and efficiency. Likewise, the machine, in accordance with this second aspect of the technical solution, is less susceptible to possible vibrational effects correlated to the operation of the idle rollers or to the lesser extent of such vibrational effects attributable to malfunctions of one or more of the rollers themselves, making it possible to obtain a machine with a longer service life and a lower risk of damage to other components in the event of breakdown or failure of an idle roller. This condition therefore results in further effective monitoring produced by the sensor device on idle rollers so advantageously not very subject to the possible vibrational effects described above.

In accordance with a third aspect of the present technical solution, the use of a conveying assembly according to the first aspect outlined is adopted in the production of a layered semi-finished product.

In accordance with this third aspect of the technical solution, the use of the conveying assembly provides for an interaction of the idle roller comprised in the conveying assembly with an electrode strip or separator strip by exerting a friction interaction on it in order to convey it within the formation of the semi-finished product itself while effectively monitoring the forces to which it is subjected.

It can be understood how such use can increase controlled and efficient productivity in a machining process involving the conveying of a strip element, such as in an electrochemical cell-forming process where the convey of a separator strip and/or an electrode strip is involved.

In accordance with the third aspect of the technical solution, such use allows productivity to be increased, especially when processing a curvature-sensitive strip element, while maintaining high handling speed and adequate conveying curvature radii to limit the risk of degradation or damage to the strip element itself.

This use, however, makes it possible to optimise the structure and functionality of a machine comprising one or more of these conveying assemblies, which in turn comprise one or more idle rollers, as explained above.

In accordance with a fourth aspect of the present technical solution, an electrochemical cell production method may comprise:
- supplying electrode strips and at least one separator strip in coils;
- exercising with a conveying assembly a friction interaction with at least one of the electrode strips and at least one separator strip;
- cutting the electrode strips and the at least one separator strip into pieces of electrode strip and into one or more pieces of separator strip;
- forming a layered semi-finished product by overlapping the pieces of electrode strip with one or more pieces of separator strip;
wherein the pieces of electrode strip and one or more pieces of separator strip are mutually alternating.

In accordance with this fourth aspect of the technical solution, the said conveying assembly is an implementation of the first aspect of the present invention.

However, within this fourth aspect of the technical solution, the electrochemical cell production method is implemented by means of a machine according to the second aspect of the present technical solution and/or involves the use of a conveying assembly according to the third aspect of the present technical solution.

As a result of the above, it is possible to understand how a method of producing electrochemical cells according to the present aspect of the technical solution achieves high productivity by allowing the adoption and monitoring of higher separator and/or electrode strip handling speeds than in other solutions while still guaranteeing adequate conveying curvature radii -especially of separator strips-to limit or prevent their degradation or damage as a result of interaction with the idle rollers.

The implementation of a production method for electrochemical cells, according to the present aspect, also makes it possible to employ machines in the production of electrochemical cells that are more durable in efficiency and capable of achieving better performance than conventional solutions, and to ensure that they can maintain their performance over time by promptly identifying non-ideal operating conditions, as detailed above.

In at least one of the aforesaid aspects, the present technical solution may also have at least one of the preferred features set out hereinafter.

According to one or more of the aspects of the present technical solution, the primary portion of the idle roller shell is free of protruding ridges within the idle roller cavity itself so as to minimise the idle roller's rotational moment of inertia while maintaining a high degree of structural and manufacturing simplicity of the idle roller using conventional processing techniques.

Alternatively, the shell, according to one or more of the aspects of the present technical solution, may comprise ridges or ribs extending from the primary portion towards the geometric axis and which are configured to stiffen the shell itself. Thus, the shell is effectively and simply given high shape stability and structural strength, which is to be favoured in implementations of the present invention that may involve higher idle roller stresses. The uneven mass distribution of the shell, however, allows for an average thickness of the shell that is thinner than in today's known solutions, making it possible to contain the rotational inertia of the idle roller.

The shell, according to one or more aspects of the present technical solution, may include a secondary portion that has a smaller extension, along the geometric axis, than the primary portion, thus allowing the rotational inertia of the idle roller to be kept contained, the contribution of the primary portion, along the geometric axis, being preponderant with respect to that attributable to the secondary portion. For example, the secondary portion can be configured to couple with rotoidal joints to connect the shell to an idle roller support. Concordantly, the secondary portion can be configured to be connected through a shape coupling, e.g. by interference, with a cylindrical outer face of a rotoidal joint.

In a possible embodiment according to one or more aspects of the present technical solution, the rotoidal joint comprises a rolling bearing with an outer ring to which the secondary portion is adapted to be integrally coupled, an inner ring to be attached to the idle roller support, and, in a per se traditional manner, rolling elements interposed between the outer ring and the inner ring.

According to at least one aspect of the present technical solution, the primary portion of the shell can be made of aluminium alloy so as to present a distinctly low rotational inertia while ensuring that particularly low thicknesses such as, preferably, less than 5 mm and more preferably not more than 3 mm can be achieved.

Alternatively, according to one or more aspects of the present technical solution, at least the primary portion of the shell, and more preferably the entire shell, is made of a thin layer of composite material which, preferably but not necessarily, may comprise a resin matrix in which carbon fibres or other material are embedded and, preferably, a fabric consisting of strips substantially made of carbon fibre or other material. In accordance with this embodiment of one or more aspects of the present technical solution, it is possible to obtain a shell with high structural performance, particularly in terms of dimensional and shape stability, while at the same time allowing for a particularly low rotational inertia compared to conventional solutions.

In an embodiment in accordance with one or more aspects of the present technical solution, the shell may have a plurality of lightening openings.

In accordance with one or more aspects of the present technical solution, the shell may have an outer side surface of a shape substantially corresponding to a side surface of a cylinder.

In an alternative embodiment, according to one or more aspects of the present technical solution, the shell may have an outer side surface of a shape substantially corresponding to a side surface of a truncated cone.

According to one or more aspects of the present technical solution, the idle roller may comprise structural elements extending from the shell towards the geometric axis.

The structural elements and the shell can be mutually integral or can be coupled to move, in use, in a mutually integral way.

For example, the shell and such structural elements can be made by additive manufacturing techniques, e.g. of metal material so as to allow a high degree of freedom in the choice of a mass distribution of the idle roller, with respect to the geometric axis, depending on the contingent implementation requirements of the invention.

According to one or more of the aspects of the present technical solution, the structural elements may comprise at least one axial support or consist of at least one axial support. The axial support may, preferably but not necessarily, develop along the geometric axis and may be hollow in order to contain rotational inertia while having a larger footprint, radial to the geometric axis, than a possible implementation in which the axial support may be devoid of internal cavities and configured to minimise its own mass distribution in the direction radial to the geometric axis in order to minimise rotational inertia.

Each axial support, according to one or more of the aspects of the present technical solution, can define a coupling seat that is adapted to be engaged by the rotoidal joint member.

In particular, in a possible embodiment according to one or more aspects of the present technical solution, the idle roller may comprise only two axial supports that can be placed in mutually distant positions with respect to the geometric axis of the idle roller. In such a case, the shell can have two ends of its own, along the geometric axis, each of which can be connected to one of the two axial supports to couple the shell, for example, to respective rotoidal joints.

More specifically, according to one or more aspects of the present technical solution, the idle roller can have a shell that has a first end and a second end, between which it extends along the geometric axis. One of the axial supports can be attached to the first end and a second of the axial supports can be attached to the second end.

Along the geometric axis between the first axial support and the second axial support, according to one or more aspects of the present technical solution, there may be additional axial supports which may be positioned at a regular pitch along the geometric axis so as to modulate the shape stability and rotational inertia of the idle roller according to the contingent implementation requirements of the present technical solution.

In an embodiment of the present technical solution, according to one or more of its aspects, additional axial supports may be absent in addition to the two axial supports fixed at the first end and the second end respectively. This embodiment may be preferable where minimising rotational inertia is to be preferred to maximising resistance to shell deformations.

Again, in accordance with one or more aspects of the present technical solution, between the two axial supports fixed respectively at the first and second ends, there may be interconnecting elements that extend between the first support and the second support and that may have -for example- a helical development around the geometric axis and that may support the shell or be integral with the latter, in order to stiffen it.

In accordance with at least one of the aspects of the present technical solution, the idle roller has an axial support coupling seat that is cylindrical with a concentricity tolerance between the seat and the operating surface that is no more than 0.06 mm in order to achieve a reliable and effective convey of a strip element particularly, but not exclusively, in the field of electrochemical cell formation.

Especially but not exclusively in this field, the concentricity tolerance between the seat and the operating surface can be set to a value of no more than 0.04 mm and, preferably, no more than 0.02 mm in order to achieve particularly high performance in terms of precision and reliability of the idle roller and, consequently, to be able to achieve high productivity.

Furthermore, in accordance with at least one of the aspects of the present technical solution, the idle roller has an operating surface that has a cylindricity tolerance, referred to its shell, of no more than 0.05 mm, preferably no more than 0.03 mm, and which may be fixed at no more than 0.015 mm, depending on the contingent requirements for use of an idle roller in accordance with at least one of the aspects of the present technical solution.

For example, the said cylindricity tolerance of the diameter of the operating surface can be set all the lower to increase the precision of the idle roller at the expense of its construction cost.

According to one or more aspects of the present technical solution, the idle roller has an operating surface of the shell that has a roughness, expressed in micrometres, which - depending on the contingent implementation requirements of the invention - may be no more than 3.2, in particular no more than 1.6 and which may be no more than 0.8 to allow, in combination with the containment of rotational inertia, to prevent or limit deterioration or damage of a strip element interacting with the operating surface.

In particular, a lower roughness can be set at lower values to prevent slippage of the strip element on the operating surface, with the same contact force. In fact, a reduction in roughness makes it possible to increase the mutual interaction surface and, for the same contact force, to increase the reciprocal friction that counteracts mutual slippage.

With reference to the above machine, in accordance with one or more aspects of the present technical solution it can be configured for the production of electrochemical cells.

In this case, the strip elements comprise at least one electrode strip and at least one separator strip or multilayer separator strip.

According to one or more aspects of the present technical solution, the supply section, the intermediate section and the processing section can be configured to interact with the at least one electrode strip or the at least one separator strip.

In particular, the intermediate section can be provided with a plurality of idle rollers as described above, which can be implemented according to one or more aspects of the present technical solution.

The processing section, in particular, may comprise a forming station, or consist of the latter.

In particular, the forming station can be configured to make electrode strips and at least one separator strip, forming a semi-finished product with an overlapping and alternating layer structure.

For example, the forming station can be configured to make prismatic cells by stacking alternating layers of separator strip and electrode strip, or by folding the separator strip back on itself in a "z" shape with pieces of electrode strip in between to form an electrolytic cell in which they are stacked alternately, according to the structure known as z-folding.

Alternatively, the forming station may comprise a winding member onto which the electrode strip and separator strip are wound to form a layered semi-finished product with a cylindrical shape. The forming station may comprise at least one idle roller implemented according to at least one aspect of the present technical solution, in order to effectively convey the separator strip and/or electrode strip which are, in operation, drawn from the winding member in the formation of the aforementioned semi-finished product.

According to one or more aspects of the present technical solution, the conveying assembly comprising the idle roller may comprise two rotoidal joints that, for example, rotatably connect each support portion to the idle roller.

In other words, each of the support portions can be coupled to the idle roller via one of the rotoidal joints.

In accordance with one or more aspects of the present technical solution, the idle roller may have two cavities each configured to accommodate the insertion of one of the rotoidal joints.

The support portion may comprise two male elements each configured to couple in a rotoidal joint seat to connect the idle roller to the support portion, rotating about the geometric axis. This makes it possible to minimise the radial footprint of the rotoidal joints, thereby minimising the contribution of the rotoidal joints to the stresses between the idle roller and the strip element, especially by minimising the contribution to these stresses of the rotational inertia of each rotoidal joint and/or its rolling friction (e.g. in the case of rotoidal elements comprising bearings) or sliding friction (e.g. in the case of rotoidal elements comprising bushings or the like).

In an alternative version, the idle roller, in accordance with one or more aspects of the present technical solution, can have two protuberances, each configured to fit into a hole in said rotoidal joints. The support portion may at the same time comprise two female elements each configured to accommodate in insertion one of the rotoidal joints to rotatably connect the idle roller to the support portion about the geometric axis.

In detail, according to one or more aspects of the present technical solution, the conveying assembly is provided with two sensor devices, each of which is coupled to one of the coupling portions and to the idle roller to detect, at opposite ends of the idle roller, respective stresses transmitted between the respective coupling portion and the idle roller itself. Thus it is possible to detect uneven stress between the strip element and the idle roller along the geometric axis. This makes it possible to prevent unbalanced operation of a conveying assembly and/or a machine comprising it.

Each sensor device can be structurally placed between a coupling portion and a rotoidal joint that is connected to the idle roller in such a way as to detect stress that is transmitted between them, through the sensor device itself.

In accordance with one or more aspects of the present technical solution, in particular, the sensor device may comprise an annular load cell. In such a case, the load cell can surround a rod that is internally fixed to the rotoidal joint, which is externally fixed to the idle roller, so that the radial footprint of the rotoidal joint can be minimised by limiting its contribution to interaction stresses between the idle roller and a strip element.

In particular, this means that the inertial contribution of the idle rollers according to one or more aspects of the present technical solution, which is reduced in comparison to traditional idle rollers, makes it possible to limit errors in the stress readings made by the sensor devices that could compromise the reliability of the stress measurement.

In fact, the Applicant has found that the reduction of the inertial contribution of the idle roller according to the present invention allows for a precise and accurate reading, over time, of the tension to which a strip element interacting with the idle roller is subjected.

According to an embodiment, the at least one sensor device comprises a respective annular load cell.

Preferably, the method comprises detecting via said annular load cell mutually transmitted stress between the respective coupling portion and the idle roller.

In this way, it is possible to limit errors in stress readings made by sensor devices that could compromise the reliability of stress measurements.

The characteristics and advantages of the invention will become clearer from the detailed description of a preferred embodiment example thereof, illustrated by way of non-limiting example, with reference to the accompanying drawings wherein:
- Figure 1 shows a schematic perspective view of an idle roller according to one or more aspects of the present technical solution;
- Figure 2 shows a schematic front view of the idle roller in Figure 1;
- Figure 3 shows a view of the idle roller in Figures 1 and 2 sectioned according to the plane III-III in Figure 2;
- Figure 3a shows a schematic detail and perspective view of the idle roller in Figures 1-3 in a conveying assembly;
- Figure 4 shows a partial schematic perspective view of an idle roller according to one or more aspects of the present technical solution;
- Figure 5 shows a sectional view of the idle roller in Figure 4;
- Figures 6 and 7 show a partial schematic perspective view of possible embodiments of an idle roller according to one or more aspects of the present technical solution;
- Figures 8 and 9 show, respectively, a section and a partial schematic view of an embodiment of the idle roller in Figures 1-3;
- Figures 10 and 11 show, respectively, a section and a partial schematic view of a further embodiment of the idle roller in Figures 1-3 and 8-9;
- Figures 12 and 13 show, respectively, perspective and front views of a conveying assembly according to one or more aspects of the present technical solution, partially in section;
- Figure 14 shows a variant of the conveying assembly in Figures 12 and 13.

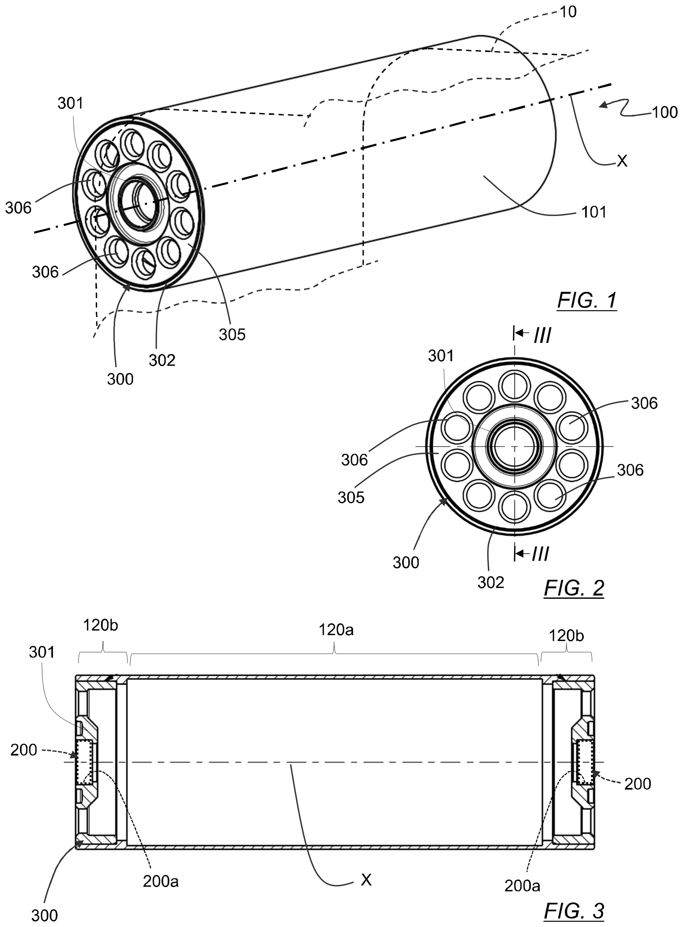

With particular reference to Figures 1, 2 and 3, 100 denotes as a whole an idle roller that has a geometric axis X and an operating surface 101 configured to be engaged by a strip element 10, depicted in hatching in Figure 1. An example of a condition of use of the idle roller 100, in which its operating surface 101 is partially engaged by the strip element 10 which, specifically, engages a central section of the development of the idle roller 100 along the geometric axis X, is illustrated in said figure, so as to avoid loss of contact of the strip element 10 with the idle roller 100 even if changes in the engagement position along the geometric axis X should occur during the interaction of the idle roller 100 and the strip element 10, during operation.

The strip element, overall indicated with reference 10 in the accompanying figures may be a separator strip or an electrode strip in implementations of the present technical solution in which the idle roller 100 is used in the production of electrochemical cells. Operationally, the strip element 10 is adapted to be dragged in its longitudinal direction.

The operating surface 101 is adapted to exert a frictional interaction with the strip element 10, when the idle roller 100 is in use, to bring about a movement of the strip element 10 guided by the idle roller 100.

The idle roller 100 comprises a shell 120 that defines, externally, the operating surface 101 and, internally, an internal cavity A to the idle roller 100.

The shell 120 has a primary portion 120a which extends with a thickness, measured in a direction radial to the geometric axis X, which is substantially uniform along the geometric axis X and preferably is not more than 1 mm.

The shell 120 is coupled to two rotoidal joints 200 that define an axis of rotation which, in the example in the figures, coincides with the geometric axis X and is not further indicated.

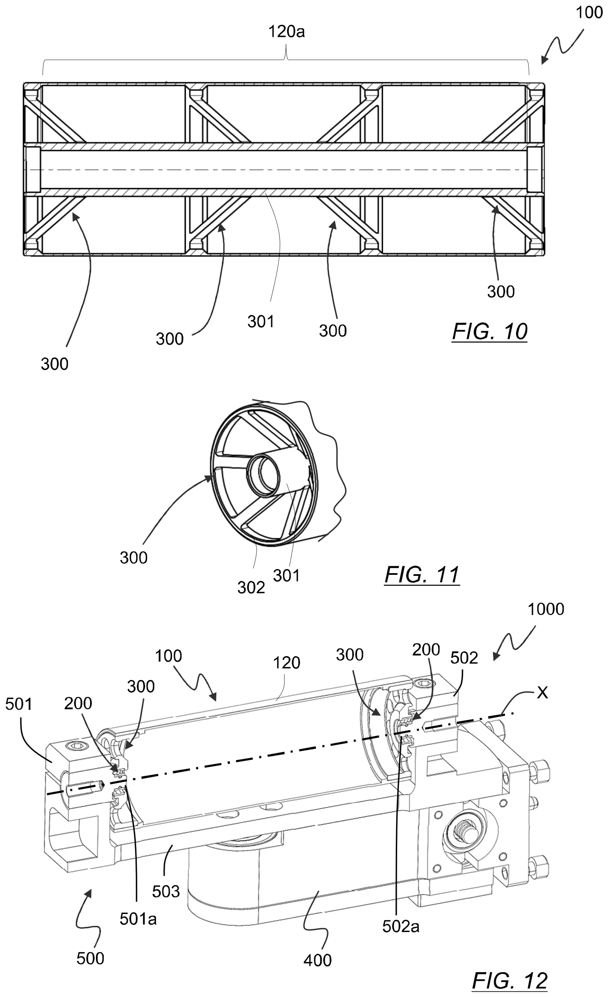

Each rotoidal coupling 200 is designed to connect the idle roller 100 to a support structure such as, for example, that shown in Figure 12 and indicated with reference 400. This connection is evidently made in a rotatable manner about the axis of rotation so that the geometric axis X essentially coincides with the axis of rotation.

In the example of Figures 1-3 and 12-14, the primary portion 120a of the shell 120 of the idle roller 100 is devoid of protruding ridges within the cavity of the idle roller 100 itself and is substantially tubular so as to minimise the rotational moment of inertia of the idle roller 100 while maintaining a high degree of structural and constructional simplicity.

An idle roller according to this example can, for example, be made of metal material by processing by chip removal or other conventional processing techniques.

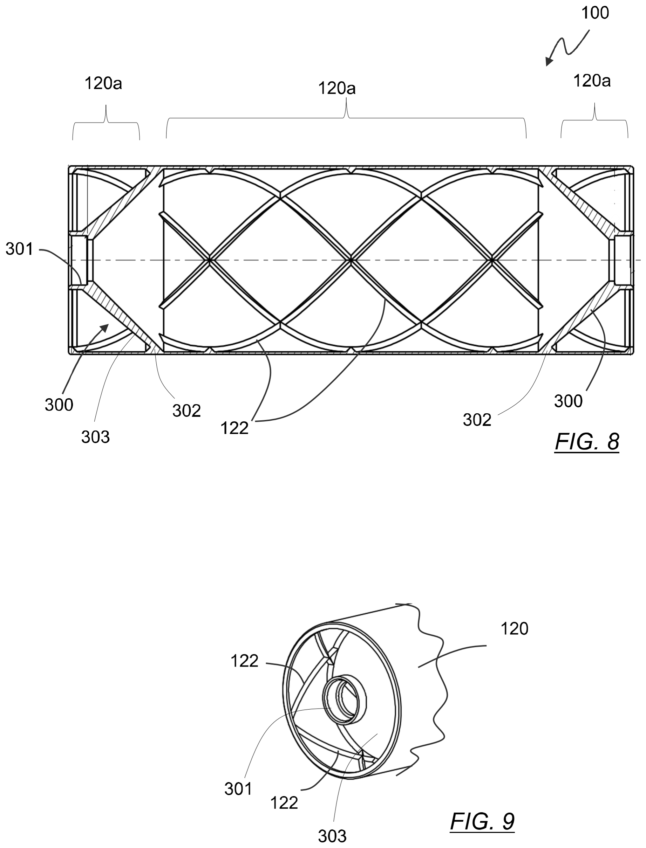

In possible, but not exclusive, alternative embodiments of the idle roller 100, exemplified in Figures 8-11, the shell 120 comprises ridges 121 or ribs 122 extending from the primary portion 120a towards the geometric axis X.

In particular, the ridges 121 and ribs 122 in Figures 8, 9 and 10, 11 are configured to stiffen the shell 120 while maintaining a particularly thin thickness in the areas of the primary portion 120a without any of them.

The shell 120 includes a secondary portion 120b configured to couple with rotoidal joints 200 to connect the shell 120 to a support for the idle roller 100.

The secondary portion 120b has a smaller extension along the geometric axis X than the primary portion 120a, thus allowing the rotational inertia of the idle roller 100 to be kept low. In fact, the contribution of the primary portion 120a, along the geometric axis X, is preponderant with respect to that attributable to the secondary portion 120b.

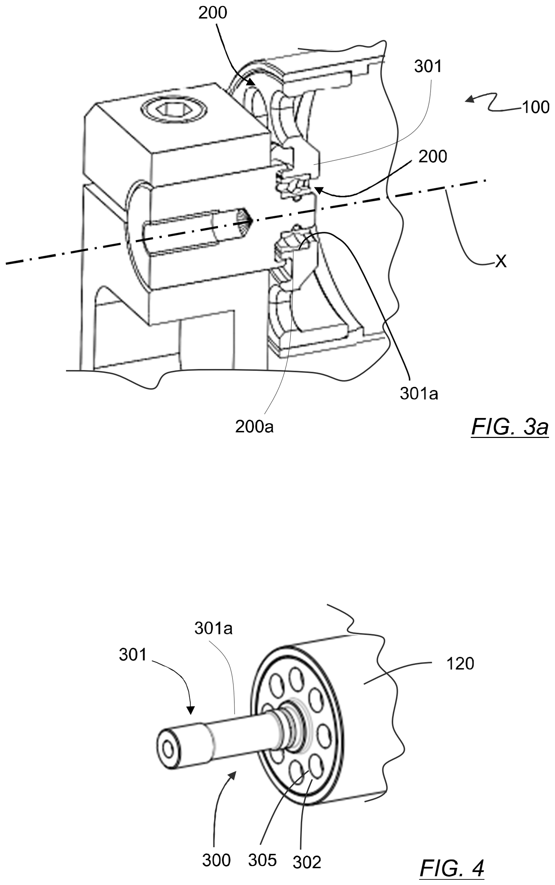

The secondary portion 120b, in the example of Figures 1 to 3, is configured to be connected by a shape coupling, e.g. by interference fit, with a cylindrical outer face 200a of a rotoidal joint 200, which in Figure 3 is depicted in hatching.

In the embodiments shown in the figures, the shell 120 includes a substantially cylindrical outer surface. In alternative embodiments (not shown in the figures), the shell 120 includes a substantially truncated outer surface.

In a possible embodiment according to one or more aspects of the present technical solution, the rotoidal joint 200 may comprise a rolling bearing, e.g. a ball bearing, as for example in the version shown in Figures 3a and 12-14.

In this case, the rolling bearing has
- an outer ring to which the secondary portion 120b is adapted to be integrally coupled,
- an inner ring to be attached to the support of the idle roller 100 in a conventional manner,
- rolling elements interposed between the outer ring and the inner ring, e.g. balls or rollers, depending on the contingent implementation requirements of the present solution.

The primary portion 120a of the shell 120 is preferably made of aluminium alloy and has thicknesses particularly less than 5 mm and preferably not exceeding 3 mm.

Alternatively, the primary portion 120a of the shell 120, and more preferably the entire shell 120, is made of a thin layer of composite material and preferably of carbon fibre, i.e. a resin matrix in which a fabric made of carbon fibre strips is embedded.

In an embodiment not shown in the figures, the shell 120 can include a plurality of lightening openings. The openings, where present, are dimensioned so as not to adversely affect the dragging of the strip.

As exemplified in the accompanying figures, the idle roller 100 may comprise structural elements which in this description are collectively referred to as 300 and which - in general - extend from the shell 120 towards the geometric axis X.

The structural elements 300 and the shell 120 can be mutually integral or are coupled to move in a mutually integral manner.

In detail, with reference to Figures 8 and 9, the shell 120 and structural elements 300 are manufactured using additive manufacturing techniques, e.g. made of metal material, so as to allow a high margin of freedom in the choice of a mass distribution of the idle roller 100, with respect to the geometric axis X, depending on the contingent implementation requirements of this solution.

In these Figures 8 and 9, for example, the shell is provided with ribs 122 developing along helical trajectories around the geometric axis and with two structural elements 300 presenting a predominantly conical shape tapered towards opposite ends of the shell 120.

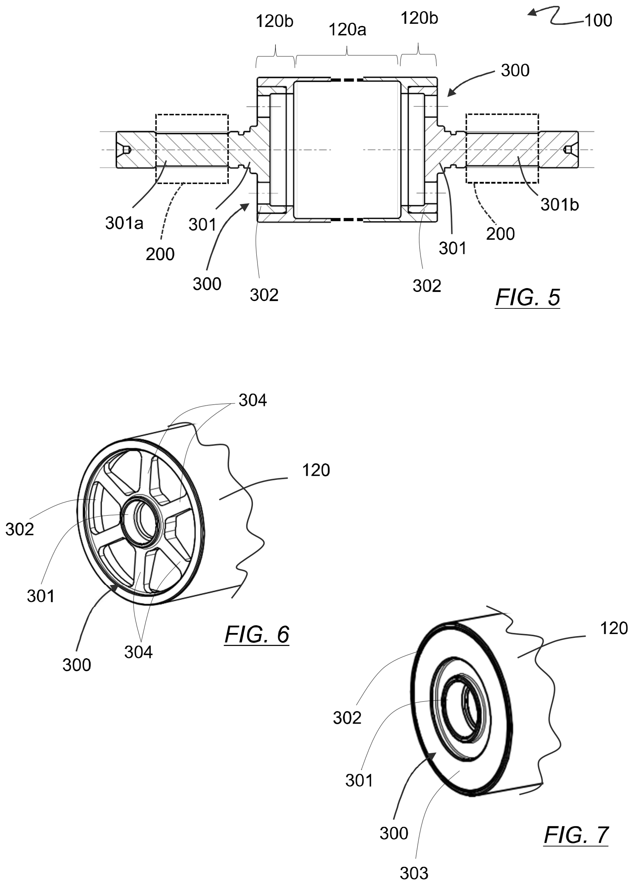

In accordance with the example in Figures 1-3a, the structural elements 300 comprise an axial support 301. The axial bearing 301 runs along the geometric axis X and is hollow in order to accommodate a rotoidal joint 200 and to contain rotational inertia. By contrast, in the alternative exemplified in Figures 4 and 5, the axial support 301 has no internal cavities and is configured to minimise its mass distribution in the direction radial to the geometric axis X, to minimise rotational inertia and to couple internally to a rotoidal joint 200.

Each axial support 301 defines a coupling seat 301a that is suitable to be engaged by the rotoidal joint member 200 internally, as exemplified in Figures 1-3a or 6-14, or externally as exemplified in Figures 4 and 5.

The embodiments of the idle roller 100 exemplified in the accompanying figures exclusively have two axial supports 301 placed in mutually distal positions along the geometric axis X. In particular, the shell 120 has two ends of its own, along the geometric axis X, each of them connected to one of the two axial supports 301 to couple the shell 120 to respective rotoidal joints 200 so that the idle roller 100 is internally hollow and substantially supported at its said ends.

In more detail, the idle roller 100 has a shell 120 having a first end and a second end, between which it extends along the geometric axis X. A first of the axial supports 301 may be attached to the first end and a second of the axial supports 301 may be attached to the second end.

Along the geometric axis X between the first and second of the axial supports 301 there may be additional axial supports that can be positioned at a regular pitch along the geometric axis X, in a number and with shapes arranged according to the contingent implementation requirement of the invention.

Or, as exemplified in Figure 10, a single axial support 301, tubular, common to a plurality of structural elements 300 which are thus mutually integral, can be provided.

Still with reference to the figures the two axial supports 301 fixed respectively at the first end and at the second end of the shell 120, there may be interconnecting elements (not shown in the accompanying figures) extending between the first support and the second support and which may have -for example- a helical development around the geometric axis X and which may support the shell 120 or be integral with the latter, in order to stiffen it.

The idle roller 100 has a coupling seat 301a of the axial supports 301 that is cylindrical with a concentricity tolerance between the seat and the operating surface 101 that is no more than 0.06 mm to achieve a reliable and effective convey of a strip element 10 particularly, but not exclusively, in the field of electrochemical cell formation.

The concentricity tolerance between the seat and the operating surface 101 may be set at a value of no more than 0.04 mm and preferably no more than 0.02 mm. The operating surface 101 has a cylindricity tolerance, referring to its diameter, of no more than 0.05 mm and preferably no more than 0.03 mm, and can be set to a value of no more than 0.015 mm.

The operating surface 101 of the shell 120 has a roughness, expressed in micrometres, that is no more than 3.2, preferably no more than 1.6 and more preferably no more than 0.8.

Structurally, the structural elements 300 may have an outer annular portion 302 coupled with the shell 120 and connected to the respective axial support 301, for example by means of an integral wall 303, as exemplified in Figures 7-9, or by means of a plurality of discrete elements 304, arranged in a radial pattern, as exemplified in Figure 6, or, again, by means of a perforated wall 305, provided with a plurality of lightening apertures 306, as for example shown in Figures 1-3a.

Figures 12-14 show an example of a conveying assembly 1000 comprising a support device 500 and a idle roller 100.

The support device 500 has two coupling portions 501, 502 configured to couple to the idle roller 100 in a rotatable manner about the geometric axis X.

A support portion 503 mechanically joins the two coupling portions 501, 502 and extends between them externally to the shell 120 of the idle roller 100.

The idle roller 100 is rotatably connected to each support portion 501, 502 via two corresponding rotoidal joints 200.

In other words, each of the support portions can be coupled to the idle roller 100 by means of one of the rotoidal joints 200.

In accordance with the example in Figure 12, each support portion 501, 502 may comprise two male elements 501a, 502a each configured to couple in a seat of the rotoidal joints 200 to connect, rotatably about the geometric axis X, the idle roller 100 to the support portions 501, 502.

In the alternative version shown in Figures 4 and 5, the idle roller 100, in accordance with one or more aspects of the present technical solution, can have two protuberances 301a, 301b, each configured to fit into a hole in the rotoidal joints 200. The support portion 501, 502 may simultaneously comprise two female elements each configured to accommodate in insertion one of the rotoidal joints 200 to rotatably connect the idle roller 100 to the support portion 501, 502 about the geometric axis X.

With reference to the example in the figure
In order to monitor the operation of a idle roller 100 and to prevent deterioration or damage of a strip element 10 being conveyed by it, the conveying assembly 1000 comprises a pair of sensor devices 1001, 1002 each connected to one of the coupling portions 501, 502 and to the idle roller 100, at opposite ends of the idle roller 100.

The sensor devices 1001, 1002 are configured to detect a mutually transmitted stress between the respective coupling portion 501, 502 and idle roller 100.

In detail, each sensor device 1001,1002 is structurally interposed between a coupling portion 501, 502 and a rotoidal joint 200 that is connected to the idle roller 100, so that a stress is transmitted between them via the sensor device 1001,1002 itself.

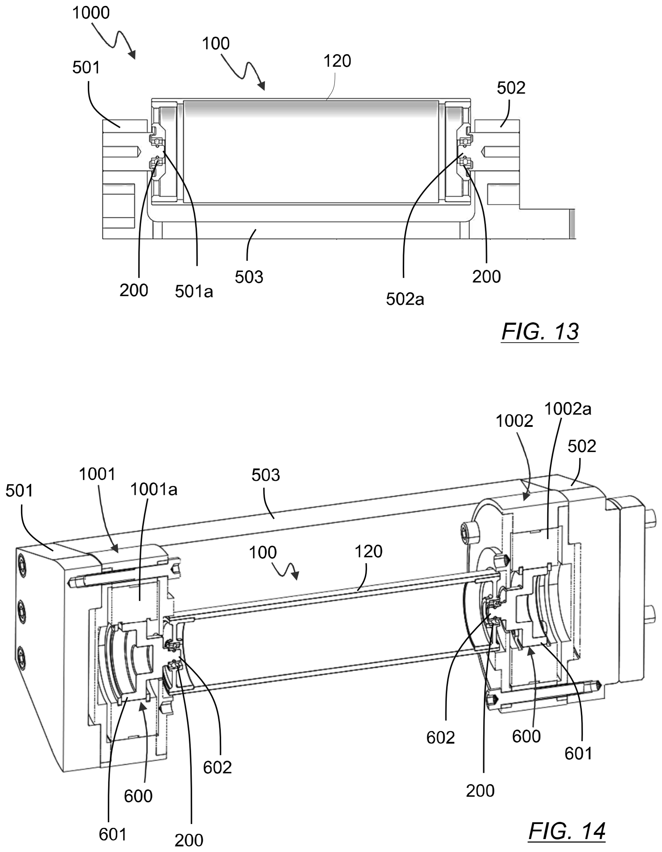

Referring to the example in Figure 14, each sensor device 1001, 1002 comprises an annular load cell 1001a, 1002a surrounding a first part 601 of a connection body 600, which has a second part 602 internally attached to the rotoidal joint 200. The latter, in turn, is externally attached to the idle roller 100. In particular, this configuration makes it possible to minimise the radial dimensions of the rotoidal joint 200 by limiting its contribution to interaction stresses between idle roller 100 and a strip element 10 that engages it.

In accordance with the present invention, a machine for processing strip elements, in itself conventional and not illustrated in the accompanying figures, has
- a supply section, configured to receive a strip element; the strip element - in particular- may be a separator strip, possibly multilayer, and/or an electrode strip if the machine is intended for the production of electrolytic cells or is part of a production line adapted to form them;
- a processing section that is configured to process the strip element coming from the supply section, and
- an intermediate section communicating with the supply section and the processing section to transfer the strip element between them.

In particular, the present machine can be configured for the production of electrochemical cells. In this case, the strip elements comprise at least one electrode strip and at least one separator strip or multilayer separator strip.

In accordance with the present invention, the supply section, the processing section and the intermediate section include one or more idle rollers 100 or conveying assemblies 1000, as described above, to convey the strip element 10.

The processing section, in particular, can comprise a forming station that can be configured to make electrode and separator strips, forming a semi-finished product with an overlapping and alternating layer structure.

For example, the forming station can be configured to implement a folding of the separator strip on itself in the shape of a "z" with pieces of electrode strip in between to form an electrolytic cell in which they are stacked alternately according to the structure known as z-folding.

In another embodiment, the forming station can be configured to stack alternating layers of separator strip and electrode strip, cut, for example, within the forming station itself.

Alternatively, the forming station may comprise a winding member onto which the electrode strip and separator strip are wound to form a layered semi-finished product with a substantially cylindrical shape. In such a case, preferably the forming station comprises, to convey the separator strip or electrode strip, idle rollers 100, possibly integrated in conveying assemblies 1000.

The idle roller 100 or conveying assembly 1000 allow the implementation of an electrochemical cell production method, which comprises:
- supplying electrode strips and at least one separator strip in coils;
- exercising with a idle roller 100 or a conveying assembly 1000 a friction interaction with the electrode strips and separator strips;
- cutting the electrode strips and separator strips into pieces;
- forming a layered semi-finished product by overlapping the pieces of electrode strip with the pieces of separator strip, wherein the pieces of electrode strip and the pieces of separator strip are mutually alternating.

This method is preferably implemented by means of a machine as described above.

Obviously, a person skilled in the art may, in order to meet specific and contingent application requirements, make further modifications and variants, all falling within the scope of protection as defined by the following claims.

## Claims

1. Conveying assembly (1000) for a strip element (10) comprising
- an idle roller (100) having a geometric axis (X) and an operating surface (101) configured to be engaged at least partially, when said idle roller (100) is being used, by a strip element (10) adapted to be dragged in a longitudinal direction thereof;
wherein said operating surface (101) is adapted to exert, when said idle roller (100) is being used, a friction interaction with said strip element (10);
wherein said idle roller (100) comprises a shell (120) that defines, externally, said operating surface (101) and, internally, a cavity within said idle roller (100);
wherein said shell (120) has a primary portion (120a), which extends with a thickness, measured in a direction radial to said geometric axis (X), that is substantially uniform along the geometric axis (X);
wherein said thickness of the primary portion (120a) is no more than 1 mm;
wherein said shell (120) can be coupled to at least one rotoidal joint member (200) which defines an axis of rotation and which is adapted to connect said idle roller (100) to a support structure (400) rotatably about said axis of rotation so that the geometric axis (X) substantially coincides with the axis of rotation;
- a support device (500) comprising two coupling portions (501, 502) configured to couple to said idle roller (100) in a rotatable manner about the geometric axis (X);
- a support portion (503) mechanically joining the two coupling portions (501, 502) and extending between them outside the shell (120) of the idle roller (100),
- at least one sensor device (1001, 1002) connected to one of said coupling portions (501, 502) and the idle roller (100) and configured to detect a mutually transmitted stress between said coupling portion (501, 502) and the idle roller (100).

2. Conveying assembly (1000) according to the preceding claim, comprising two of said at least one sensor device (1001, 1002) each of them being coupled to one of the two coupling portions (501, 502) and to the idle roller (100) to detect, at opposite ends of the idle roller (100), respective stresses transmitted between the respective coupling portion (501, 502) and the idle roller (100).

3. Conveying assembly (1000) according to one of claims 1 or 2 wherein the sensor device (1001, 1002) comprises an annular load cell (1001a, 1002a).

4. Conveying assembly (1000) according to one of the preceding claims, comprising two rotoidal joints (200) and wherein each of the coupling portions (501, 502) is coupled to the idle roller (100) by means of one of said two rotoidal joints (200).

5. Conveying assembly (1000) according to the preceding claim, wherein the idle roller (100) has two cavities each configured to receive the insertion of one of said rotoidal joints (200); wherein the coupling portion (501, 502) comprises two male elements (501a, 502a) each configured to couple into a seat of said rotoidal joints (200) to rotatably connect the idle roller (100) to the support portion (503) about the geometric axis (X).

6. Conveying assembly (1000) according to one of the preceding claims, wherein said shell (120) includes a secondary portion (120b) that has a smaller extension along said geometric axis (X) less than said primary portion (120a).

7. Conveying assembly (1000) according to one of the preceding claims, wherein said primary portion (120a) of the shell (120) is made of aluminium alloy.

8. Conveying assembly (1000) according to one of the preceding claims, comprising structural elements (300) extending from the shell (120) towards the geometric axis (X);
wherein the structural elements (300) and the shell (120) are mutually integral or can be coupled to move, in use, in a mutually integral way;
wherein the structural elements (300) comprise at least one axial support (301) or consist of at least one axial support (301);
wherein each axial support (301) defines a coupling seat that is adapted to be engaged by the rotoidal joint member (200).

9. Conveying assembly (1000) according to the preceding claim wherein the shell (120) has a first end and a second end, between which it extends along the geometric axis (X); a first one of the axial supports is fixed at the first end and a second one of the axial supports is fixed at the second end; wherein along the geometric axis (X) between the first axial support and the second axial support selectively:
- additional axial supports are present that can be positioned at a regular pitch along the geometric axis (X);
- additional axial supports are absent;
- interconnecting elements are present extending between the first support and the second support, which may have a helical development around the geometric axis and which may support the shell (120) or be integral with it, to stiffen it.

10. Conveying assembly (1000) according to one of the preceding claims, wherein the operating surface (101) of the shell (120) has an average roughness (Ra), expressed in micrometres, of no more than 3.2 which may be no more than 1.6 and which may be no more than 0.8.

11. Machine for processing strip elements comprising:
- at least one supply section, configured to receive at least one strip element (10) to be processed in said machine;
- at least one processing section, configured to process the at least one strip element (10) supplied to the supply section;
- an intermediate section communicating with the supply section and the processing section to transfer at least one strip element (10) between them;
wherein the at least one of the supply section, the processing section and the intermediate section includes at least one conveying assembly (1000) according to claims 1 to 10; wherein said machine is configured in such a way that, in use, the at least one idle roller (100) exerts a friction interaction with the at least one strip element (10).

12. Machine according to the preceding claim, configured for producing electrochemical cells, wherein the strip elements comprise at least one electrode strip and one separator strip, the supply section, the intermediate section and the processing section being configured to interact with the at least one electrode strip or the at least one separator strip; wherein the processing section comprises, or consists of, a forming station; wherein the forming station is configured to make electrode strips and separator strips forming a semi-finished product with an overlapping layer structure.

13. Use of a conveying assembly (1000) according to one of claims 1-10 for producing a layered semi-finished product wherein said idle roller (100) interacts with an electrode strip or a separator strip by exerting a friction interaction thereon in order to convey it within the formation of said semi-finished product.

14. Method for producing electrochemical cells, wherein the method comprises:
- supplying electrode strips and at least one separator strip in coils;
- exercising with a conveying assembly (1000) according to claims 1-10, a friction interaction with at least one of the electrode strips and at least one separator strip;
- cutting the electrode strips and the separator strip into pieces of electrode strip and into one or more pieces of separator strip;
- forming a layered semi-finished product by overlapping the pieces of electrode strip with the one or more pieces of separator strip, wherein the pieces of electrode strip and the one or more pieces of separator strip are mutually alternating.

15. Method according to the preceding claim, wherein said at least one sensor device (1001, 1002) comprises a respective annular load cell (1001a, 1002a), said method comprising detecting by means of said annular load cell (1001a, `1002a) a stress mutually transmitted between the respective coupling portion (501, 502) and the idle roller (100).
